# EUROPEAN PATENT APPLICATION

(11) **EP 0 754 846 A2**
(43) Date of publication of application: **22.01.1997**
(21) Application number: 96111627.4
(22) Date of filing: 18.07.1996
(51) Int. Cl.: F02D 37/02, F02D 41/34

(54) **Internal combustion engine and method for controlling same**

(30) Priority: 18.07.1995 JP 203910/95
(71) Applicant: YAMAHA HATSUDOKI KABUSHIKI KAISHA, Iwata-shi Shizuoka-ken, 438 (JP)
(72) Inventor: Motoyama, Yu, Iwata-shi, Shizuoka-ken (JP); Ibara, Takeru, Iwata-shi, Shizuoka-ken (JP)
(74) Representative: Grünecker, Kinkeldey, Stockmair & Schwanhäusser Anwaltssozietät

(57) **Abstract**

An internal combustion engine of the two-stroke cycle type, comprises a cylinder head affixed to a cylinder block, a crankcase fastened to said cylinder block and defining a crank chamber accommodating a crankshaft and communicating with at least one cylinder bore. A piston is reciprocatably received in said cylinder bore and defines a combustion chamber together with said cylinder head. Said combustion chamber is provided with an ignition plug. An intake passage communicates with said crank chamber via an intake port being operable by an intake valve means. Further, a fuel injection device for injecting fuel into said intake passage or said crank chamber and a control means are provided. Said control means is responsive to engine operating conditions detected by means for supplying said control means with respective signals indicative of said engine operating conditions. The control means is adapted to control both the ignition timing and the fuel injection per combustion stroke on the basis of the same engine operating conditions detected beforehand.

## Description

This invention relates to an internal combustion engine of the two-stroke cycle type, comprising a cylinder head affixed to a cylinder block, a crankcase fastened to said cylinder block and defining a crank chamber accommodating a crankshaft and communicating with at least one cylinder bore, a piston reciprocatably received in said cylinder bore and defining a combustion chamber together with said cylinder head, said combustion chamber being provided with an ignition plug, an intake passage communicating with said crank chamber via an intake port being operable by an intake valve means (23), a fuel injection device for injecting fuel into said intake passage or said crank chamber, a control means responsive to engine operating conditions detected by means for supplying said control means with respective signals indicative of said engine operating conditions, and to a method for controlling an internal combustion engine of the two-stroke cycle type, comprising a cylinder head affixed to a cylinder block, a crankcase fastened to said cylinder block and defining a crank chamber accommodating a crankshaft and communicating with at least one cylinder bore and defining a combustion chamber together with said cylinder head, said combustion chamber being provided with an ignition plug, a piston reciprocatably received in said cylinder bore, an intake passage communicating with said crank chamber via an intake port being operable by an intake valve means, a fuel injection device for injecting fuel into said intake passage or said crank chamber, a control means responsive to engine operating conditions detected by means for supplying said control means with respective signals indicative of said engine operating conditions.

The gasoline injection type engine without a carburettor has been employed in the field of high performance engines such as racing machines, in which a fuel injector is disposed either in the intake manifold, intake port or combustion chamber, fuel is directly injected to the intake air, and ignition is made in the combustion chamber with an ignition plug. Along with the technical development in the electronics in recent years, ideal and easy control for such a type of engines has become possible. As a result, such a type of engines are being employed in part of four cycle engines for ordinary passenger cars.

With the fuel injection type engine described above, in order to make the fuel ignition always commensurate with the operating conditions of the engine, it is devised that the operating conditions of the engine such as the engine speed, engine load, etc. are detected for every combustion cycle to control the fuel injection timing, fuel injection period (amount) and the ignition timing according to the detected results.

By the way, in the field of the motorcycle, most models employ the two cycle engine. For the two cycle engine too, the fuel injection type as described above has been studied. In that case too, like the case of the four cycle engine, it is necessary to control the fuel injection and ignition timing according to the detected results of the operating conditions of the engine such as the engine speed and engine load.

In the two cycle engine, however, mixture produced with a fresh charge and drawn into the space above the piston in the cylinder is compressed and ignited simultaneously with the intake of a next fresh charge into the crank chamber through the intake passage by the ascending piston, and the fresh charge in the crank chamber is then pushed into the the space above the piston in the cylinder by the descent of the piston caused by the combustion after the ignition. When the fuel injection and ignition timing of the two cycle engine are controlled simultaneously like those of the four cycle engine according to the detected results for every combustion cycle, mixture produced by the fuel injection corresponding to an ignition is supplied to the space above the piston in the cylinder after the end of the ignition according to the controlled ignition timing. As a result, the amount of fuel for combustion is not appropriate for the ignition timing.

Accordingly, it is an objective of the present invention to provide an improved internal combustion engine as well as an improved method for controlling an internal combustion engine as indicated above which facilitate the provision of an ignition timing commensurate with the fuel amount supplied to the combustion chamber for every combustion cycle, the operation of the engine always in favourable conditions, the prevention of abnormal combustion, the optimization of fuel consumption, exhaust gas and output characteristics.

According to the invention, this objective is solved for an internal combustion engine as indicated above in that said control means is adapted to control both the ignition timing and the fuel injection per combustion stroke on the basis of the same engine operating conditions detected beforehand.

Further, this objective is solved for a method for controlling an internal combustion engine as indicated above in that both the ignition timing and the fuel injection per combustion stroke is controlled on the basis of the same engine operating conditions detected beforehand.

In case one cycle or combustion cycle, respectively, of the internal combustion engine is defined between two top dead center positions of said piston, it is advantageous when said engine operating conditions are detectable immediately after or immediately before the top dead center position of that piston of a cycle previous to said cycle to be controlled.

In order to further enhance the internal combustion engine or the method for controlling said internal combustion engine, respectively, it is advantageous when said control means is adapted to control the fuel injection period such that the injection is started during the ascending piston stroke and terminated at that time a scavenging port which is located in a side wall of said cylinder bore becomes uncovered during the descending stroke of the piston, whereby fuel is injectable during said injection period with an amount determinable according to the detected engine operating conditions, and that the ignition timing of said ignition plug after an ascending piston stroke following said descending piston stroke is determinable according to the detected engine operating conditions on the basis of which the fuel injection period or amount, respectively, is determinable.

According to preferred embodiments of the present invention, said intake valve means, a reed valve, a rotary valve with a notch and rotating synchronously with said crankshaft, or a piston valve utilizing covering or uncovering function of the piston itself may be used. It is further advantageous when said control means comprises a controller having a CPU and an injection controller connected to said controller and said ignition plug.

Although in most cases it will be sufficient to provide the fuel injection device in the intake passage upstream of said valve means or at the inside of said crank chamber, it is still possible to provide said fuel injection device at both positions in order to enhance the control of the fuel amount and the mixing of said injected fuel with air.

With the control method according to an embodiment of the invention, fuel injected by the amount determined according to detected results and drawn into the crank chamber by the ascending stroke of the piston is sent as a mixture into the combustion chamber during a scavenging stroke, occurring after the ascending stroke of the piston, after ignition and combustion which has occurred in the combustion chamber. The mixture is compressed by the next ascending stroke of the piston and ignited with the ignition plug at the ignition timing determined according to the detected results.

With the control method according to another embodiment of the invention, fuel injected into the crank chamber at an early time during the injection period stays for a long period of time in the crank chamber and evaporates. Fuel injected during the descending stroke of the piston evaporates as it receives heat directly and by radiation from the piston heated by the combustion in the crank chamber to form a mixture. The mixture is sent to the combustion chamber during a succeeding scavenging stroke, compressed by a succeeding ascending stroke of the piston, and ignited with the ignition plug at the ignition timing determined according to the detected result according to which the amount of fuel injected from the injector has been determined.

In other words, either of the control methods described above makes it possible that the mixture produced with the amount of fuel determined according to results detected at a time point is ignited, when the mixture enters the combustion chamber, at the ignition timing determined according to the same detected result.

Therefore, appropriate ignition timing commensurate with the current amount of fuel contained in the mixture in the combustion chamber is provided. As a result, the engine is operated with optimum conditions to optimize fuel economy, exhaust gas, output characteristic, and to avoid abnormal combustion.

Other preferred embodiments of the present invention are laid down in further dependent claims.

In the following, the present invention is explained in greater detail with respect to several embodiments thereof in conjunction with the accompanying drawings, wherein:
FIG. 1 is an explanatory rough drawing in vertical cross section of a fuel injection type two cycle engine to which the ignition timing control method of this invention is applied;
FIG. 2 is an explanatory drawing of an embodiment of the ignition timing control method of this invention; and
FIG. 3 is an explanatory drawing of another embodiment of the ignition timing control method of this invention.

Control methods as embodiments of this invention related to the fuel injection type two cycle engine will be hereinafter described in reference to the appended drawings.

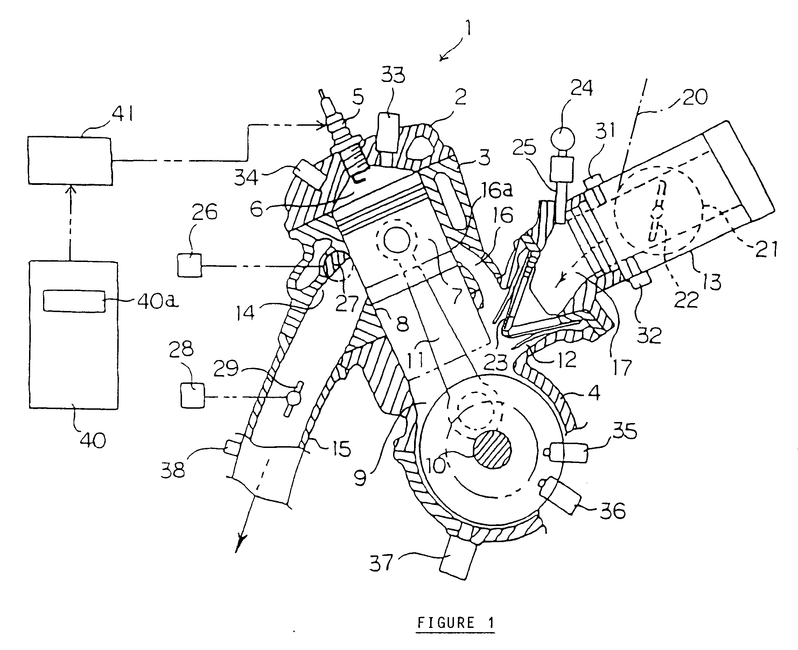

FIG. 1 shows an example of the fuel injection type two cycle engine. An engine (1) is a single cylinder two cycle engine for use as a driving source for motorcycles. The engine unit comprises a cylinder head (2), a cylinder block (3), and a crankcase (4). The underside of the cylinder head (2) is formed as a recessed combustion chamber (6) into an electrode portion of an ignition plug (5) projects. A vertical cylinder bore (8) is bored through the cylinder block (3) for receiving a piston (7) for free sliding. A crankshaft (10) with a balancing weight (not shown) is supported in a crank chamber (9) defined with the crankcase (4). The piston (7) is connected through a connecting rod (11) to the crankshaft (10).

An intake port (12) opened to the crank chamber (9) is formed in the crankcase (4). An intake pipe (13) having an inside intake passage extending from an air cleaner (not shown) is connected to the intake port (12). An exhaust port (14) opened to the cylinder bore (8) is formed in the cylinder block (3). An exhaust pipe (15) is connected to the exhaust port (14). A scavenging passage (16) is formed as a connection passage between the cylinder bore (8) in the cylinder block (3) and the crank chamber (9) in the crankcase (4).

A throttle valve (22) to be opened and closed through a wire (20) and a throttle pulley (21) by the operation of a grip (not shown) provided at an end of a steering handlebar (not shown) is provided in the middle of an intake passage (17) connected to the crank chamber (9). A reed valve (23) for preventing reverse flow of mixture from the crank chamber (9) is provided at the connecting section between the intake passage (17) and the intake port (12). An injector or a fuel injection valve (25) is provided at a location between the throttle valve (22) and the reed valve (23) so that fuel fed through a fuel supply pipe (24) is injected into the intake passage (17) synchronously with the opening timing of the reed valve (23).

The injector (25) injects fuel, supplied through the fuel supply pipe (24), only when the nozzle portion of the injector (25) is opened as its plunger (not shown) is pulled by magnetic force only when a current flows through a solenoid coil in the injector (25).

An exhaust timing control valve (27) is provided at the upper wall of the opening of the exhaust port (14). The valve (27) is driven with an actuator (26) comprising a servomotor and others so that the exhaust timing is adjusted by changing the upper end position of the exhaust port (14) opening. An exhaust passage valve (29) is provided in the middle of the exhaust passage in the exhaust pipe (15) so as to be driven with an actuator (28) comprising a servomotor and others to prevent blowby by narrowing the passage at low speeds and to stabilize rotation.

A throttle position sensor (not shown) is provided at the root of the grip (not shown) to detect the operating conditions of the engine (1). An intake pipe temperature sensor (31) and an intake pipe pressure sensor (32) are provided on the intake pipe (13) at positions downstream of the throttle valve (22). A combustion chamber pressure sensor (33) and a knock sensor (34) are provided on the cylinder head (2). An engine speed sensor (35), a crank angle sensor (36), and a crank chamber pressure sensor (37) are provided on the crankcase (4). An exhaust temperature sensor (38) is provided on the exhaust pipe (15).

A controller (40) with a CPU (40a) is provided to control the operating conditions of the engine (1) of the constitution described above. The sensors described above are connected to the input side of the controller (40). To the output side of the controller (40) from which control currents are output according to the detected results of the operating conditions of the engine (1) input from the sensors are connected to the actuator (26) for driving the exhaust timing control valve (27), the actuator (28) for driving the exhaust passage valve (29), the injector (25) for injecting fuel, and to an ignition controller (41) for controlling the ignition timing of the ignition plug (5).

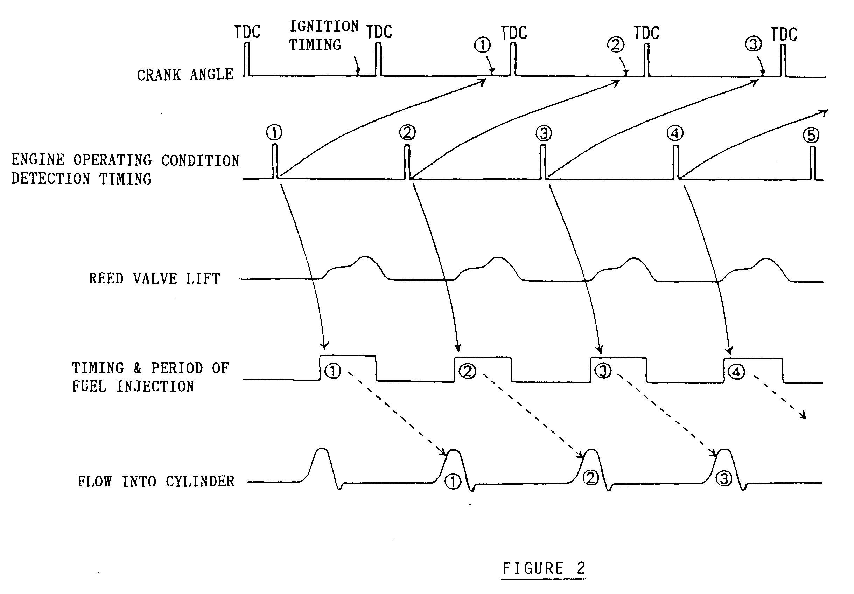

FIG. 2 shows an embodiment of this invention applied to the engine (1) to control fuel injection from the injector (25) and the ignition timing of the ignition plug (5) according to the operating conditions through the controller (40).

Assuming that one combustion cycle is from the top dead center (TDC) to the next top dead center (TDC) of the crank angle, and with the control method of this embodiment, the operating conditions of the engine are detected at the beginning of each combustion cycle and input to the controller (40) so that the fuel injection during a cycle is controlled with the controller (40) by controlling the timing and period of fuel injection according to the detected results of the operating conditions, and that the same detected results are used to control the ignition timing of the next combustion cycle with the controller (40) and the ignition controller (41).

In other words, when one cycle period is noted, the fuel injection period and timing occurring during that period are controlled according to the operating conditions of the engine detected during that period, and the ignition timing occurring during that period is controlled according to the operating conditions of the engine detected during the previous combustion cycle.

For that purpose, as shown in FIG. 2 for instance, if the engine conditions are detected at (1) and fuel is injected at (1) by controlling the timing and period of the fuel injection according to the detected results, the injected fuel flows into the cylinder at (1) during the next combustion cycle and is ignited at the ignition timing controlled according to the results detected at (1). As a result, the ignition timing and the fuel amount ignited at such timing are controlled by the results detected at the same point (1).

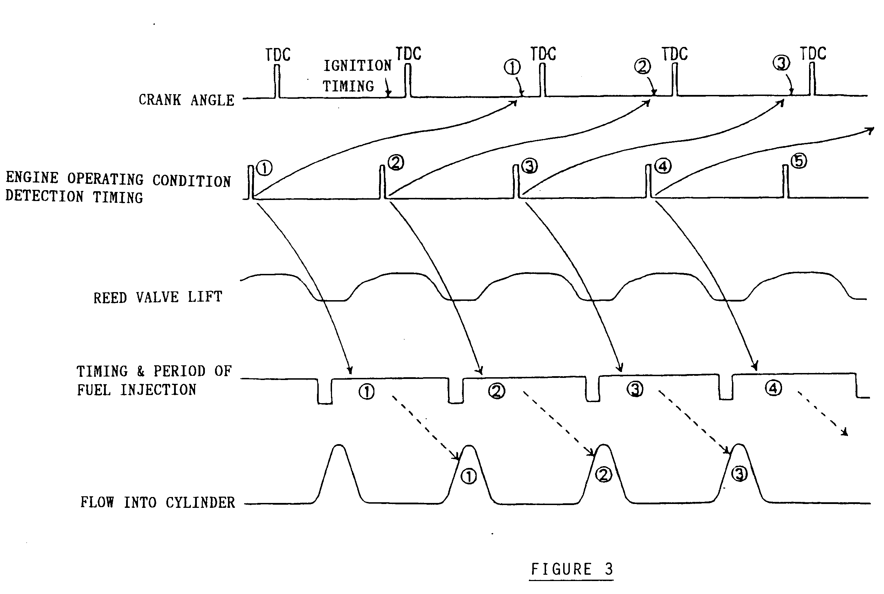

FIG. 3 shows another embodiment of ignition timing control method of this invention applied to an engine similar to that in the above embodiment while the engine is operated at high speeds. In this case, the engine operating conditions are detected before the beginning of each combustion cycle and input into the controller (40). Fuel injection for the current cycle is controlled according to the detected results. The ignition timing during the next combustion cycle is controlled with the controller (40) and the ignition controller (41) using the same detected results.

### (0026)

That is to say, when one cycle period is noted, the fuel injection period and timing occurring during that period are controlled according to the operating conditions of the engine detected during the period, and the ignition timing occurring during that period is controlled according to the operating conditions of the engine detected before the previous combustion cycle.

### (0027)

Therefore, though the detection is made one cycle earlier than in the above embodiment, the fuel injection control and the ignition timing control are made similarly to those of the above embodiment, and the ignition timing and the fuel amount ignited at such timing are controlled by the same detected results.

Although in Figs. 2 and 3 the ignition timing is set prior to the top dead center position of the piston (7), it is still possible to set the ignition timing after said top dead center position in dependence to respective engine operating conditions.

While embodiments of the invention are described above as applications to the fuel injection type two cycle engine (1) in which the injector (25) is provided in the intake passage at the position upstream of the reed valve (23), the invention is not limited to those embodiments only.

That is to say, concerning the fuel injection type two cycle engine itself to which the invention is applied, the reed valve (23) for preventing reverse flow from the crank chamber (9) to the intake passage (17) may be replaced with a rotary valve with a notch and rotating synchronously with the crank shaft (10), or a piston valve utilizing covering and uncovering function of the piston itself.

In that case, the rotary valve is arranged so that its notch makes connection between the intake passage (17) and the crank chamber (9) during the ascending stroke of the piston (7), and the piston valve is arranged so that the lower end of the piston (7) uncovers the intake port in the lower part of the cylinder bore (8) to make connection between the intake passage (17) and the crank chamber (9) during the ascending stroke of the piston (7) and shut off the connection between the intake passage (17) and the crank chamber (9) during the scavenging stroke when the piston (7) descends.

The location of the injector (25) is not limited to the one facing the intake passage (17) as described above but may be a location facing the inside of the crank chamber (9) or both.

In the case the injector (25) is disposed to face the inside of the crank chamber (9), the period of fuel injection from the injector (25) is controlled so that the injection is started during the ascending stroke of the piston (7) and finished by the time the scavenging port (16a) of the scavenging passage (16) opened on the side wall of the cylinder bore (8) begins to be uncovered with the descending piston (7). The fuel amount is determined according to the results detected during the injection period, and the ignition timing, occurring after the ascending stroke of the piston, of the ignition plug (5) is determined according to the detected results which have determined the fuel amount injected from the injector (25).

With the arrangement described above, the fuel injected into the crank chamber (9) in the early period of the fuel injection period stays for a long period of time in the crank chamber (9) and evaporates, and the fuel injected while the piston is descending evaporates as it receives heat directly or through radiation from the piston (7) heated by the combustion in the combustion chamber (6), and mixture is formed in the crank chamber (9). The mixture is sent out to the combustion chamber (6) during the succeeding scavenging stroke, compressed during the succeeding ascending stroke of the piston, and ignited with the ignition plug (5) at the ignition timing determined according to the detected results which have determined the amount of fuel injected into the crank chamber (9).

In the above embodiments, the fuel injection amount is determined to result in an air-fuel ratio commensurate with the engine operating conditions by calculating the amount of intake air from the engine speed and engine load found from the throttle opening and the intake vacuum detected with the engine speed sensor (35), the throttle opening (or position) sensor, and the intake pipe pressure sensor (32). Additionally, an intake air amount sensor (not shown) for directly detecting the amount of intake air may be employed to determine the fuel injection amount so as to produce an air-fuel ratio commensurate with the engine operating conditions detected with the various sensors.

Furthermore, the timing of detecting the engine operating conditions with various detectors such as the intake pipe temperature sensor (31), the intake pipe pressure sensor (32), and the engine speed sensor (35) may be arranged within the period when fresh charge is drawn into the crank chamber (9). With such an arrangement, fuel injection is made as determined according to the detected engine operating conditions during a combustion cycle immediately after the combustion cycle during which the fresh charge is drawn into the crank chamber (9), made to be a mixture, supplied to the combustion chamber (6), and burned. Therefore, the combustion cycle during which the detection is made is adjacent to the combustion cycle during which fuel injection and ignition are made. As a result, transient response is improved.

With the ignition timing control method for the fuel injection type two cycle engine of this invention described above, ignition timing is made optimum for the amount of fuel contained in the mixture supplied to the combustion chamber for every combustion cycle. As a result, the engine is operated always in the best condition, avoiding abnormal combustion and optimizing fuel consumption, exhaust gas, and output characteristics.

## Claims

1. Internal combustion engine (1) of the two-stroke cycle type, comprising a cylinder head (2) affixed to a cylinder block (3), a crankcase (4) fastened to said cylinder block (3) and defining a crank chamber (9) accommodating a crankshaft (10) and communicating with at least one cylinder bore (8), a piston (7) reciprocatably received in said cylinder bore (8) and defining a combustion chamber (6) together with said cylinder head (2), said combustion chamber (6) being provided with an ignition plug (5), an intake passage (17) communicating with said crank chamber (9) via an intake port (12) being operable by an intake valve means (23), a fuel injection device (25) for injecting fuel into said intake passage (17) or said crank chamber (9), a control means (40, 41) responsive to engine operating conditions detected by means (31, 32, 33, 34, 35, 36, 37, 38) for supplying said control means (40, 41) with respective signals indicative of said engine operating conditions, **characterized in that** said control means (40, 41) is adapted to control both the ignition timing and the fuel injection per combustion stroke on the basis of the same engine operating conditions detected beforehand.

2. Internal combustion engine according to claim 1, whereby one cycle or combustion cycle, respectively, is defined between two top dead center (TDC) positions of said piston (7), **characterized in that** said engine operating conditions are detectable immediately after the top dead center (TDC) position of said piston (7) of a cycle previous to said cycle to be controlled.

3. Internal combustion engine according to claim 1, whereby one cycle or combustion cycle, respectively, is defined between two top dead center (TDC) positions of said piston (7), **characterized in that** said engine operating conditions are detectable immediately before the top dead center (TDC) position of said piston (7) of a cycle previous to said cycle to be controlled.

4. Internal combustion engine according to at least one of claims 1 to 3, **characterized in that** said control means (40, 41) is adapted to control the fuel injection period such that the injection is started during the ascending piston stroke and terminated at that time a scavenging port (16a) which is located in a side wall of said cylinder bore (8) becomes uncovered during the descending stroke of the piston (7), whereby fuel is injectable during said injection period with an amount determinable according to the detected engine operating conditions, and that the ignition timing of said ignition plug (5) after an ascending piston stroke following said descending piston stroke is determinable according to the detected engine operating conditions on the basis of which the fuel injection period or amount respectively is determinable.

5. Internal combustion engine according to at least one of claims 1 to 4, **characterized in that** said intake valve means is a reed valve (23), a rotary valve with a notch and rotating synchronously with said crankshaft (10), or a piston valve utilizing covering or uncovering function of the piston (7) itself.

6. Internal combustion engine according to at least one of claims 1 to 5, **characterized in that** said control means comprising a controller (40) having a CPU (40a) and an injection controller (41) connected to said controller (40) and said ignition plug (5).

7. Internal combustion engine according to at least one of claims 1 to 6, **characterized in that** the fuel injection device (25) is provided in the intake passage upstream of said valve means (23) or at the inside of said crank chamber (9) or at both positions.

8. Internal combustion engine according to at least one of claims 1 to 7, **characterized by** an intake pipe temperature sensor (31), an intake pipe pressure sensor (32), a combustion chamber pressure sensor (33), a knock sensor (34), an engine speed sensor (35), a crank angle sensor (36), a crank chamber pressure sensor (37), an exhaust temperature sensor (38), or a throttle position sensor, or a combination of some sensors or all sensors for detecting said engine operating conditions.

9. Internal combustion engine according to at least one of claims 1 to 8, **characterized in that** said control means (40, 41) is adapted to control the ignition timing such that the ignition is initiated after the top dead center (TDC) position of said piston (7).

10. Method for controlling an internal combustion engine (1) of the two-stroke cycle type, comprising a cylinder head (2) affixed to a cylinder block (3), a crankcase (4) fastened to said cylinder block (3) and defining a crank chamber (9) accommodating a crankshaft (10) and communicating with at least one cylinder bore (8) and defining a combustion chamber (6) together with said cylinder head (2), said combustion chamber (6) being provided with an ignition plug (5), a piston (7) reciprocatably received in said cylinder bore (8), an intake passage (17) communicating with said crank chamber (19) via an intake port (12) being operable by an intake valve means (23), a fuel injection device (25) for injecting fuel into said intake passage (17) or said crank chamber (9), a control means (40, 41) responsive to engine operating conditions detected by means (31, 32, 33, 34, 35, 36, 37, 38) for supplying said control means (40, 41) with respective signals indicative of said engine operating conditions, **characterized in that** both the ignition timing and the fuel injection per combustion stroke is controlled on the basis of the same engine operating conditions detected beforehand,

11. Method according to claim 10, wherein one cycle or combustion stroke, respectively, is defined between two top dead center (TDC) positions of said piston (7), **characterized in that** said engine operating conditions are detected immediately after a top dead center (TDC) position of said piston (7) of a cycle or combustion cycle previous to said cycle to be controlled.

12. Method according to claim 11, **characterized in that** fuel injection is started and terminated within one cycle.

13. Method according to claim 10, wherein one cycle or combustion cycle, respectively, is defined between two top dead center (TDC) positions of said piston (7), **characterized in that** said engine operating conditions are detected immediately before the top dead center (TDC) position of said piston (7) of a cycle previous to said cycle to be controlled.

14. Method according to at least one of claims 10 to 13, **characterized in that** the fuel injection period is controlled such that the injection is started during an ascending piston stroke and terminated at that time a scavenging port (16a), which is located in a side wall of said cylinder bore (8), becomes uncovered during the descending stroke of the piston (7), whereby fuel is injected during said injection period with an amount determined according to the detected engine operating conditions, and that the ignition timing of said ignition plug (5) after an ascending piston stroke following said descending piston stroke is determined according to the detected engine operating conditions on the basis of which the fuel injection period or amount, respectively, has been determined.

15. Method according to claim 13, **characterized in that** fuel injection is started within one cycle and terminated within the following cycle.
